(19) Europäisches Patentamt
European Patent Office
Office européen des brevets

(11) **EP 3 004 438 B1**

(12) **EUROPEAN PATENT SPECIFICATION**

(45) Date of publication and mention
of the grant of the patent:
**26.09.2018 Bulletin 2018/39**

(21) Application number: **14731824.0**

(22) Date of filing: **30.05.2014**

(51) Int Cl.:
*D01F 8/06* (2006.01)     *D01F 8/14* (2006.01)
*D01D 5/34* (2006.01)     *D01D 5/32* (2006.01)
*D01F 1/10* (2006.01)     *D02G 1/00* (2006.01)
*D04H 1/42* (2012.01)     *D04H 1/54* (2012.01)

(86) International application number:
**PCT/JP2014/065022**

(87) International publication number:
**WO 2014/192976 (04.12.2014 Gazette 2014/49)**

(54) **HEAT-BONDABLE CONJUGATE FIBER WITH EXCELLENT SOFTNESS AND NONWOVEN FABRIC USING THE SAME**

HEISSVERSCHWEISSBARE KONJUGATFASER VON HERVORRAGENDER WEICHHEIT UND VLIESSTOFF DAMIT

FIBRE CONJUGUÉE POUVANT ÊTRE LIÉE PAR LA CHALEUR DE DOUCEUR EXCELLENTE ET NON-TISSÉ L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2013 JP 2013115739**

(43) Date of publication of application:
**13.04.2016 Bulletin 2016/15**

(73) Proprietors:
• **ES FiberVisions Hong Kong Limited**
  **Hong Kong (CN)**
• **ES FiberVisions Hong Kong Limited**
  **Hong Kong (CN)**
• **ES FiberVisions LP**
  **Athens, Georgia 30601 (US)**
• **ES Fibervisions APS**
  **6800 Varde (DK)**

(72) Inventors:
• **KUBOTA, Hitoshi**
  **Osaka-shi**
  **Osaka 530-6108 (JP)**
• **IDEGUTI, Tadashi**
  **Osaka-shi**
  **Osaka 530-6108 (JP)**

(74) Representative: **Thurston, Joanna**
**Withers & Rogers LLP**
**4 More London Riverside**
**London SE1 2AU (GB)**

(56) References cited:
**WO-A1-2012/105602     WO-A2-2011/025062**
**JP-A- 2007 204 901     US-A- 3 904 730**
**US-A1- 2007 014 987     US-A1- 2010 143 717**

## Description

### Technical Field

The present invention relates to a heat-bondable conjugate fiber, particularly to a heat-bondable conjugate fiber making it possible to obtain a nonwoven fabric or the like with excellent softness. More specifically, the present invention relates to a heat-bondable conjugate fiber making it possible to obtain, for example, a nonwoven fabric excellent in softness and suitable for applications, e.g., an absorbent article for sanitary materials such as diaper, napkin and pad, a medical and hygienic material, a daily life-related material, a general medical material, a bedding material, a filter material, a nursing care product, and a pet product, and a nonwoven fabric with excellent softness using the same.

### Background Art

Conventionally, a heat-bondable conjugate fiber formable by heat fusion utilizing thermal energy such as hot air and heated roll can easily give a nonwoven fabric excellent in bulkiness and softness and therefore, is widely used for a sanitary material such as diaper, napkin and pad, living goods, and an industrial material such as filter. Among these, a sanitary material is put into direct contact with human skin or needs to swiftly absorb a fluid such as urine and menstrual blood and therefore, places a very high importance on the bulkiness and softness. Representative techniques for obtaining bulkiness are a method using a highly rigid resin and a method using a fiber with a large fineness, but in such a case, the nonwoven fabric obtained is reduced in the softness and causes strong physical irritation to the skin. On the other hand, when priority is placed on softness so as to suppress the irritation to the skin, the nonwoven fabric obtained is greatly reduced in bulkiness, particularly in the cushioning effect, and comes to exhibit a poor fluid absorption property.

To solve these problems, there have been proposed many methods for obtaining a fiber and a nonwoven fabric each capable of satisfying both bulkiness and softness. For example, PTL 1 has proposed a crimping conjugate fiber excellent in the bulk recovery and composed of a sheath-core conjugate fiber using a polytrimethylene terephthalate-based resin as the core component and using a polyolefin-based resin as the sheath component. Also, PTL 2 has proposed a high-bulky heat-bondable conjugate fiber excellent in the crimp configuration stability and composed of a sheath-core conjugate fiber using a polyester-based resin as the core component and using a polyolefin-based resin as the sheath component. PTL 3 describes polyethylene and polyester conjugate fibers wherein the melting point of the polyester is at least 40°C more than the melting point of a linear polyethylene component of the polyethylene part of the fiber wherein the gravity center of the polyester component is deviated from the gravity center of the fiber. PTL 4 describes a thermal bonding conjugate fiber with an eccentric core-sheath structure wherein the core comprises a polyester resin and the sheath a polyolefin resin having a melting point at least 15°C lower than the melting point of the polyester resin. PTL 5 describes a similar conjugate fiber wherein the first component is an ethylene-$\alpha$-olefin copolymer and a second component formed from a thermal plastic polymer within melting point higher than the melting point of the first component.

### Citation List

#### Patent Literature

[PTL 1] JP-A-2003-3334 (the term "JP-A" as used herein means an "unexamined published Japanese patent application")
[PTL 2] JP-A-2008-274448 and US 2010/143717 A1
[PTL 3] WO 2012/105602 A1
[PTL 4] WO 2011/025062 A2
[PTL 5] US 2007/014987 A1

### Summary of Invention

#### Technical Problem

However, these methods are specialized toward bulkiness or bulk recovery and leave room for improvement in softness of the nonwoven fabric.

An object of the present invention is to provide a heat-bondable conjugate fiber ensuring that the crimp configuration stability can be maintained even in the state of leaving elongation of the fiber and bulkiness and softness are imparted to the nonwoven fabric, and a nonwoven fabric using the same.

Solution to Problem

The present inventors have made many intensive studies to solve the problems above. As a result, it has been found that when a conjugate fiber composed of a first component containing a polyester-based resin and a second component containing a polyolefin-based resin is used and its drawing conditions, mechanical crimp-imparting conditions and drying conditions (hereinafter, sometimes referred to as "heat treatment conditions"; also, the step of performing the "drying" is sometimes referred to as "drying step" or "heat treatment step") are adjusted to provide an actualized crimping heat-bondable conjugate fiber prevented from rigidity reduction due to heat even in the state of leaving elongation of the fiber, the above-described object can be attained. The present invention has been accomplished based on this finding.

That is, the present invention has the following configurations.

[1] A heat-bondable conjugate fiber comprising a first component containing a polyester-based resin and a second component containing a polyolefin-based resin having a melting point lower by 15°C or more than the melting point of said polyester-based resin, wherein said second component is a heat-bondable conjugate fiber accounting for 30% or more of the outer fiber circumference in the fiber cross-section intersecting the length direction of the fiber and having a side-by-side or eccentric sheath-core structure and the fiber has an elongation of 50 to 120%, a three-dimensional actualized crimp with 10 to 20 crests/2.54 cm and a crimp modulus of 85 to 100%.

[2] The heat-bondable conjugate fiber as described in the above [1], wherein said polyester-based resin is at least one member selected from the group consisting of polyethylene terephthalate, polypropylene terephthalate, polybutylene terephthalate, polylactic acid, polybutylene succinate, and polybutylene adipate terephthalate.

[3] The heat-bondable conjugate fiber as described in the above [1] or [2], wherein said polyolefin-based resin is at least one member selected from the group consisting of polyethylene, polypropylene, and a copolymer with the main component being propylene.

[4] The heat-bondable conjugate fiber as described in any one of the above [1] to [3], wherein the fineness of the heat-bondable conjugate fiber is from 0.9 to 8.0 dtex.

[5] The heat-bondable conjugate fiber as described in any one of the above [1] to [4], wherein an inorganic fine particle is contained in the heat-bondable conjugate fiber and the content of said inorganic fine particle is from 0.1 to 10 mass% based on the mass of said heat-bondable conjugate fiber.

[6] A method for producing the heat-bondable conjugate fiber described in any one of the above [1] to [5], comprising:

a step of obtaining an undrawn fiber by melt-spinning a first component containing a polyester-based resin and a second component containing a polyolefin-based resin having a melting point lower by 15°C or more than the melting point of said polyester-based resin to have a side-by-side or eccentric sheath-core cross-sectional shape in which said second components accounts for 30% or more of the outer fiber circumference,

a step of drawing the obtained undrawn fiber to 75 to 95% of the draw ratio at break of the undrawn fiber wherein the drawing temperature is a temperature higher by at least 30°C than the glass transition temperature of the polyester-based resin of the first component and less by at least 70°C than the glass transition temperature of the polyester-based resin of the first component and at the same time, less than the melting point of the polyolefin-based resin constituting the second component, and

a step of heating the obtained drawn fiber to impart three-dimensional actualized crimping by heat shrinkage.

[7] The method for producing a heat-bondable conjugate fiber as described in the above [6], wherein after the drawing step, the obtained drawn fiber is mechanically crimped to impart two-dimensional crimping with a number of crimps of 5 to 10 crests/2.54 cm.

[8] A nonwoven fabric obtained using the heat-bondable conjugate fiber described in any one of the above [1] to [5].

[9] The nonwoven fabric as described in the above [8], wherein the specific volume of the nonwoven fabric is from 80 to 130 cm$^3$/g.

Advantageous Effects of Invention

The heat-bondable conjugate fiber of the present invention can keep a three-dimensional actualized crimp shape, despite having a good and certain elongation of the fiber, and therefore, crimp configuration stability can be maintained even at heat-bondable in the processing into a nonwoven fabric, making it possible to produce a nonwoven fabric with high softness and excellent bulkiness.

Description of Embodiments

The present invention is described in more detail below.

The heat-bondable conjugate fiber of the present invention is a heat-bondable conjugate fiber comprising a first component containing a polyester-based resin and a second component containing a polyolefin-based resin having a melting point lower by 15°C or more than the melting point of the polyester-based resin, wherein the second component is a heat-bondable conjugate fiber accounting for 30% or more of the outer fiber circumference in the fiber cross-section intersecting the length direction of the fiber and having a side-by-side or eccentric sheath-core structure.

(First Component)

The polyester-based fiber constituting the first component of the heat-bondable conjugate fiber (hereinafter, sometimes simply referred to as "conjugate fiber") of the present invention can be obtained by condensation polymerization of a diol and a dicarboxylic acid.

The dicarboxylic acid used in the condensation polymerization of the polyester-based resin includes terephthalic acid, isophthalic acid, 2,6-naphthalenedicarboxylic acid, adipic acid, sebacic acid, and the like. The diol used includes ethylene glycol, diethylene glycol, 1,3-propanediol, 1,4-butanediol, neopentyl glycol, 1,4-cyclohexanedimethanol, and the like.

As the polyester-based resin for use in the present invention, an aromatic polyester such as polyethylene terephthalate, polypropylene terephthalate and polybutylene terephthalate may be preferably used. In addition to the aromatic polyester, an aliphatic polyester may also be used. Preferred aliphatic polyester resins include polylactic acid and polybutylene succinate.

These polyester-based resins may be not only a homopolymer but also a copolymerized polyester (copolyester). At this time, a dicarboxylic acid component such as adipic acid, sebacic acid, phthalic acid, isophthalic acid and 2,6-naphthalenedicarboxylic acid, a diol component such as diethylene glycol and neopentyl glycol, and an optical isomer such as L-lactic acid, may be utilized as the copolymerization component. The copolymer above includes, for example, polybutylene adipate terephthalate. Furthermore, two or more of these polyester-based resins may be mixed and used.

In consideration of, for example, raw material cost or thermal stability of the fiber obtained, the first component is most preferably an unmodified polymer composed of only polyethylene terephthalate.

The first component is not particularly limited as long as a polyester-based resin is contained, but the polyester-based resin is preferably contained in an amount of 80 mass% or more, and the polyester-based resin is more preferably contained in an amount of 90 mass% or more. Furthermore, as long as the effects of the present invention are not inhibited, additives such as an antioxidant, a light stabilizer, an ultraviolet absorber, a neutralizer, a nucleating agent, an epoxy stabilizer, a lubricant, an antibacterial agent, a flame retardant, an antistatic agent, a pigment and a plasticizer may be appropriately added, if desired.

(Second Component)

The polyolefin-based resin constituting the second component of the conjugate fiber of the present invention is not particularly limited as long as it satisfies the condition of having a melting point lower by 15°C or more than the melting point of the polyester-based resin constituting the first component.

For example, polyethylene, polypropylene, polybutene-1, polyhexene-1, polyoctene-1, poly 4-methylpentene-1, polymethylpentene, 1,2-polybutadiene, and 1,4-polybutadiene may be used. In such a homopolymer, an $\alpha$-olefin such as ethylene, propylene, butene-1, hexene-1, octene-1 and 4-methylpentene-1 may be contained as a copolymerization component under the condition that the component is a component other than the monomer constituting the homopolymer above. Furthermore, another ethylene-based unsaturated monomer such as butadiene, isoprene, 1,3-pentadiene, styrene and $\alpha$-methylstyrene may be contained as a copolymerization component.

Two or more of these polyolefin-based resins may also be mixed and used. As for these resins, not only a polyolefin-based resin polymerized using a conventional Ziegler-Natta catalyst but also a polyolefin-based resin polymerized using a metallocene flow rate (hereinafter, simply referred to as MFR) of the polyolefin-based resin that can be suitably used is not particularly limited as long as it is in the spinnable range, but the MFR is preferably from 1 to 100 g/10 min, more preferably from 5 to 70 g/10 min.

The polyolefin-based resin constituting the second component of the conjugate fiber of the present invention is preferably at least one polyolefin-based resin selected from the group consisting of polyethylene, polypropylene, and a copolymer comprising propylene as the main component. Examples thereof include high-density polyethylene, linear low-density polyethylene, low-density polyethylene, polypropylene (propylene homopolymer), an ethylene-propylene copolymer with the main component being propylene, and an ethylene-propylene-butene-1 copolymer with the main component being propylene. The "copolymer comprising propylene as the main component" as used herein indicates a copolymer where among copolymerization components constituting the copolymer, the propylene unit accounts for a largest amount.

Incidentally, in the case where the first component is a mixture of two or more polyester-based resins and/or the second component is a mixture of two or more polyolefin-based resins, the "polyolefin-based resin constituting the second component has a melting point lower by 15°C or more than the melting point of the polyester-based resin constituting the first component" indicates that a resin having a highest melting point in the mixture of polyolefin-based resins constituting the second component has a melting point lower by 15°C or more than the melting point of a resin having a lowest melting point in the mixture of polyester-based resins constituting the first component.

The physical properties other than MFR of the polyolefin, for example, physical properties such as Q value (weight average molecular weight/number average molecular weight), Rockwell hardness and number of methyl-branched chains, are not particularly limited as long as the polymer satisfies the requirements of the present invention.

The second component is not particularly limited if a polyolefin-based resin is contained therein, but the polyolefin-based resin is preferably contained in an amount of 80 mass% or more, and the polyolefin-based resin is more preferably contained in an amount of 90 mass% or more. As long as the effects of the present invention is not inhibited, additives exemplified for the first component may be appropriately contained, if desired.

(Conjugate Fiber)

The combination of the first component and the second component in the conjugate fiber of the present invention is not limited as long as the polyolefin-based resin constituting the second component satisfies the condition of having a melting point lower by 15°C or more than the melting point of the polyester-based resin constituting the first component, and a combination of components selected from those illustrated above for the first component and the second component may be used.

Specific examples of the combination of first component/second component include polyethylene terephthalate/polypropylene, polyethylene terephthalate/high-density polyethylene, polyethylene terephthalate/linear low-density polyethylene, and polyethylene terephthalate/low-density polyethylene. Among these combinations, polyethylene terephthalate/high-density polyethylene is preferred.

(Eccentric Sheath-Core Structure)

In the case where the conjugate fiber of the present invention has an eccentric sheath-core structure, the fiber may be an eccentric solid sheath-core conjugate fiber or an eccentric hollow sheath-core conjugate fiber. The eccentric sheath-core type indicates that the center of gravity of the core side differs from that of the sheath side in the fiber cross-section intersecting the length direction of the fiber, and in view of spinnability or three-dimensional actualized crimp (hereinafter, sometimes simply referred to "actualized crimp") developability, the eccentricity ratio is preferably from 0.05 to 0.50, more preferably from 0.15 to 0.30. Incidentally, the eccentricity ratio as used herein is represented by the following formula described in JP-A-2006-97157:

$$\text{Eccentricity ratio} = d/R$$

wherein d and R are as follows: d is the distance between the center point of the conjugate fiber and the center point of the first component constituting the core, and R is the radius of the conjugate fiber.

The cross-sectional shape on the core side may be not only a circular shape but also an irregular shape, and examples of the irregular shape include star, ellipse, triangle, quadrangle, pentagon, multifoliate, array, T-shape and horseshoe. However, in view of three-dimensional actualized crimp developability, the cross-sectional shape on the core side is preferably circle, semi-circle or ellipse, and in view of strength of the nonwoven fabric, is more preferably circle.

(Side-by-Side Structure)

In the case where the conjugate fiber of the present invention has a side-by-side (parallel) structure, the second component accounts for 30% or more of the outer fiber circumference in the fiber cross-section intersecting the length direction of the fiber. Thanks to this proportion, the three-dimensional actualized crimp developability is improved. Specifically, the second component preferably accounts for 30 to 70%, more preferably from 40 to 60%, of the outer fiber circumference.

The conjugate fiber of the present invention is provided with three-dimensional actualized crimping, and the number of crimps is from 10 to 20 crests/2.54 cm.

The three-dimensional actualized crimping indicates to have a three-dimensional crimp shape, for example, a spiral or ohm shape (a shape where the crest/trough is not acutely angled but is rounded and three-dimensionally twisted) and may offer a three-dimensional crimp shape by one crimp alone or a three-dimensional crimp shape by mixed crimps, and this is not particularly limited. By having such a three-dimensional crimp shape, a bulky and soft nonwoven fabric is easily obtained.

The number of crimps in the three-dimensional actualized crimping is from 10 to 20 crests/2.54 cm, preferably from 12 to 16 crests/2.54 cm. With a number of crimps in this range, the card passability in the carding step in the process of fabricating a nonwoven fabric is stabilized, and a bulky and soft nonwoven fabric is easily obtained.

As for the crimp shape of the conjugate fiber of the present invention, three-dimensional actualized crimping is predominating, but two-dimensional crimping provided with a planar zigzag configuration (bending shape) by mechanical crimping may be mixed together. In the case of having mechanical crimping, the three-dimensional actualized crimp preferably accounts for 50% or more, more preferably 80% or more.

In the fiber cross-section intersecting the length direction of the conjugate fiber of the present invention, the conjugate ratio of first component and second component is preferably from 10/90 to 90/10 vol%, more preferably from 30/70 to 70/30 vol%, still more preferably from 40/60 to 50/50 vol%. With a conjugate ratio in this range, an actualized crimp by heat is likely to be developed. Incidentally, also in the following description, the unit of conjugate ratio is vol%.

The fineness of the conjugate fiber of the present invention is not particularly limited but is preferably from 0.9 to 8.0 dtex. Specifically, in the case of a fiber used for sanitary materials or supplies, the fineness is preferably from 1.0 to 8.0 dtex, more preferably from 1.7 to 6.0 dtex, still more preferably from 2.6 to 4.4 dtex. With a fineness in this range, both bulkiness and softness are easily achieved.

The strength of the conjugate fiber of the present invention is not particularly limited, but, for example, in the case of a fiber used for sanitary materials or supplies, the strength is preferably from 1.5 to 4.0 cN/dtex, more preferably from 2.0 to 3.0 cN/dtex. With a strength in this range, both configuration stability and bulkiness of the fiber can be satisfied.

The elongation of the conjugate fiber of the present invention is from 50 to 120%, preferably from 70 to 100%. With an elongation in this range, softness can be imparted to the nonwoven fabric.

With respect to the elongation as used in the present invention, a tensile test is performed in accordance with JIS L 1015 (2010) by using a tensile tester and setting the clamp distance to 20 mm, and the elongation when the sample is broken, is defined as the elongation of the fiber.

The crimp modulus of the conjugate fiber of the present invention is from 85 to 100%, preferably from 90 to 97%. The crimp modulus is defined in JIS L 2080 as "the percentage of the difference between the fiber length when the crimp is straightened and the length after the fiber is loosen and left standing for a predetermined time, based on the difference between the length when straightened and the original length". The specific measuring method is provided in JIS L 1015 (2010). With a crimp modulus of 85% or more, the actualized crimp configuration stability can be maintained in the process of fabricating a nonwoven fabric. In turn, bulkiness and softness can be imparted to the nonwoven fabric.

In the conjugate fiber of the present invention, an inorganic fine particle may be appropriately added, if desired, for providing a draping effect derived from its own weight or a smooth texture or for obtaining a fiber with excellent softness by producing an air gap inside or outside the fiber, such as void or crack. The amount of the inorganic fine particle added in the fiber is preferably from 0 to 10 mass%, more preferably from 0.1 to 10 mass%, still more preferably from 1 to 5 mass% based on the mass of the conjugate fiber of the present invention.

The inorganic fine particle is not particularly limited as long as it is a material having a high specific gravity and being less likely to cause aggregation in the melted resin, but the material includes, for example, titanium oxide (specific gravity: from 3.7 to 4.3), zinc oxide (specific gravity: from 5.2 to 5.7), barium titanate (specific gravity: from 5.5 to 5.6), barium carbonate (specific gravity: from 4.3 to 4.4), barium sulfate (specific gravity: from 4.2 to 4.6), zirconium oxide (specific gravity: 5.5), zirconium silicate (specific gravity: 4.7), alumina (specific gravity: from 3.7 to 3.9), magnesium oxide (specific gravity: 3.2), and a material having substantially the same specific gravity as the materials above, and among these, titanium oxide is preferably used. It is generally known to add and use such an inorganic fine particle in a fiber for the purpose of masking, antimicrobial, deodorization, and the like. The inorganic fine particle used preferably has a particle diameter or shape causing no problem such as yarn breakage in the spinning step or drawing step.

The method for adding the inorganic fine particle includes, for example, a method of adding a powder of inorganic fine particle directly to the first component or second component, and a method of kneading the inorganic fine particle into the resin to make a masterbatch and adding the masterbatch to the first component or second component. As for the resin used to make a masterbatch, use of the same resin as the first or second component is most preferred, but this resin is not particularly limited if it satisfies the requirements of the present invention, and a resin different from the first and second components may also be used.

(Production Method of Conjugate Fiber)

The production method of the conjugate fiber of the present invention is described below.

The conjugate fiber can be produced as follows. First, a polyester-based resin working out to a raw material of the conjugate fiber of the present invention is arranged for the first component, an olefin-based resin having a melting point lower by 15°C or more than that of the first component is arranged for the second component, and these resins are processed into a side-by-side or eccentric sheath-core undrawn fiber where the second component accounts for 30% or more of the outer fiber circumference in the fiber cross-section intersecting the length direction of the fiber.

The undrawn fiber having the structure above can be produced by melt-spinning the raw materials through a known side-by-side spinning nozzle or a known eccentric sheath-core spinning nozzle to make up a side-by-side or eccentric sheath-core cross-sectional shape.

The temperature condition at the melt spinning is not particularly limited, but the spinning temperature is preferably 250°C or more, more preferably 280°C or more, still more preferably 300°C or more. The spinning temperature is preferably 250°C or more, because the number of yarn breakages during spinning is reduced and at the same time, an undrawn yarn allowing its elongation after drawing to be likely to remain is obtained, and the spinning temperature is more preferably 280°C or more because of higher intensity of these effects, still more preferably 300°C or more because of still higher intensity of the effects. The upper limit of the temperature may be a temperature enabling successful spinning and is not particularly limited.

Also, the spinning speed is not particularly limited but is preferably from 300 to 1,500 m/min, more preferably from 600 to 1,000 m/min. The spinning speed is preferably 300 m/min or more, because the single-hole discharge amount at the time of obtaining an undrawn yarn with an arbitrary spinning fineness can be increased to provide satisfactory productivity.

The undrawn yarn obtained under the conditions above is drawn in a drawing step.

The drawing temperature is a temperature higher by 30 to 70°C than the glass transition temperature of the polyester-based resin constituting the first component and at the same time, less than the melting point of the polyolefin-based resin constituting the second component, preferably a temperature higher by 40 to 60°C than the glass transition temperature of the polyester-based resin and less than the melting point of the polyolefin-based resin.

The drawing temperature as used herein means the temperature of the fiber at the drawing starting position. The drawing temperature is preferably not less than "glass transition temperature of polyester-based resin as the first component + 30°C", because the fiber elongation can be kept high and the elongation after drawing can be allowed to remain. When the drawing temperature is a higher temperature, the effects thereof are advantageously obtained even in drawing at a high strain rate, that is, at a high draw ratio. However, if the drawing temperature is excessively high, cold crystallization of the first component occurs until the undrawn fiber is drawn, and the remaining of elongation is inhibited. From this viewpoint, the drawing temperature is set to be not more than "glass transition temperature of polyester as the first component + 70°C". Also, the drawing temperature needs to be less than the melting point of the olefin-based resin as the second component, so as to suppress destabilization in the course of drawing due to fusion of fibers to each other.

For example, in the case of drawing an undrawn fiber by arranging a polyethylene terephthalate having a glass transition temperature of 70°C for the first component and arranging a high-density polyethylene having a melting point of 130°C for the second component, the drawing temperature is set to be from 100°C to less than 130°C. When the drawing temperature is 100°C or more, the heat quantity for the fiber is increased, and the difference in drawability between the polyethylene terephthalate and the high-density polyethylene becomes small, as a result, the risk of causing sheath-core separation during carding in the process of fabricating a nonwoven fabric is reduced.

The draw ratio is from 75 to 95%, preferably from 80 to 95%, more preferably from 85 to 90%, of the draw ratio at break of the undrawn fiber. The draw ratio at break indicates the draw ratio at the time of occurrence of a fiber breakage in the course of drawing the undrawn fiber. When the draw ratio is 75% or more of the draw ratio at break, decrease in the rigidity due to heat can be suppressed. When the draw ratio is 95% or less of the draw ratio at break, developability of an actualized crimp produced along with drawing resulting from actualization of a latent crimp due to the conjugate structure of the conjugate fiber of the present invention and the difference in the stress-strain imposed on the first component and the second component is reduced. Therefore, in the subsequent drying step (heat treatment step), the ratio of development of an actualized crimp produced resulting from actualization of a latent crimp due to the conjugate structure of the fiber and the difference in heat shrinkability between the first component and the second component can be increased.

Next, the drawn fiber obtained in the drawing step is dried to impart three-dimensional actualized crimping.

In the present invention, the actualized crimp is developed in the drying step (heat treatment step) of the fiber. The development of actualized crimp is derived from the conjugate structure of the conjugate fiber of the present invention and the difference in heat shrinkability between conjugate components, and an actualized crimp is developed resulting from actualization of a latent crimp existing in the fiber.

Compared with the actualized crimp developed in the drawing step, the actualized crimp developed in the drying step has a large crimp diameter, and the number of actualized crimps is in a proper range. In the present invention, three-dimensional actualized crimping with 10 to 20 crests/2.54 cm is formed, and actualized crimping with 12 to 16 crests/2.54 cm is preferably formed. With the number of actualized crimps in the range above, entanglement of fibers due to actualized crimping is reduced, and the card passability in the subsequent carding step is improved.

Incidentally, in the present invention, mechanical crimping may be imparted before the drying step. By performing mechanical crimping, the card passing stability in the carding step can be enhanced. In the case of performing mechanical crimping, it is preferable to impart mechanical crimping with 5 to 10 crests/2.54 cm, more preferably from 7 to 9 crests/2.54 cm.

If the crimp diameter of the actualized crimp developed in the drying step is small (the crimp is fine), the fiber and the nonwoven fabric obtained using the fiber come to have a hard texture, but when mechanical crimping with 5 to 10 crests/2.54 cm is imparted, the fiber is subjected to heat and strong stress at the time of imparting mechanical crimping, and their thermodynamic/physical effects are memorized/fixed as the fiber shape inside the fiber.

In the drying step, a latent crimp is actualized while holding on the thermodynamic/physical effects previously memorized/fixed inside the fiber, and therefore, compared with the case of not imparting mechanical crimping, an actualized crimp having a large crimp diameter is likely to be developed under the influence of such memory/shape. The increase in the crimp diameter leads to enhanced softness of the fiber, and by virtue of being previously subjected to thermodynamic/physical action in the mechanical crimping step, the fiber obtained in the drying step becomes a fiber excellent particularly in the actualized crimp configuration stability.

Before imparting the mechanical crimping, an annealing treatment may also be applied under an atmosphere such as wet heat and steam, if desired, so as to improve the heat history, suppress the stress relaxation and finely adjust the heat shrinkage in the heat treatment step.

The drying step (heat treatment step) is preferably performed, for example, using a hot air dryer or the like at a temperature lower than the melting point of the second component but not lower in excess of 15°C than the melting point, preferably at a temperature lower than the melting point of the second component but not lower in excess of 10°C than the melting point. Such a treatment promotes development of an actualized crimp and crystallization and in turn, a crimp having an appropriate elongation and a large crimp diameter and being soft and excellent in configuration stability can be obtained. Developability of the actualized crimp can be controlled also by the draw ratio, the number of mechanical crimps, or the heat history before imparting mechanical crimping.

The number of crimps of three-dimensional actualized crimping obtained by actualization of a latent crimp in the drying step (heat treatment step) is from 10 to 20 crests/2.54 cm, preferably from 12 to 16 crests/2.54 cm. The obtained crimp has a three-dimensional actualized crimp shape, but a planar zigzag crimp (two-dimensional crimp) originated in mechanical crimping may remain.

The essence of the production method of the conjugate fiber of the present invention consists in that the drawing is performed in the drawing step at a draw ratio low enough to leave elongation of the fiber while inhibiting or suppressing development of a latent crimp and subsequently, an actualized crimp of the fiber is developed in the post-step, that is, the fiber heat treatment step, particularly, in the fiber drying step before formation of a nonwoven fabric.

Also, in a step before the drying step, mechanical crimping with a relatively small number of crimps, specifically, from 5 to 10 crests/2.54 cm, is preferably imparted to the fiber.

Thereafter, the fiber can be cut into a short fiber. The fiber length of the short fiber may be selected according to usage and is not particularly limited, but in the case of performing a carding process, the fiber length is preferably from 20 to 102 mm, more preferably from 30 to 51 mm.

(Nonwoven Fabric)

By using the conjugate fiber of the present invention, a bulky nonwoven fabric having a specific volume of 80 $cm^3$/g or more can be suitably obtained. Specifically, a nonwoven fabric of 80 to 130 $cm^3$/g can be suitably obtained. The conditions of processing into a nonwoven fabric are not particularly limited, but there is, for example, a method where a carded web obtained using a roller carding machine is heat-treated at 130 to 145°C to make a nonwoven fabric having a basis weight of 20 to 30 g/m$^2$. The heat treatment method is not particularly limited, but a through-air process and the like are preferred in that the nonwoven fabric can be fabricated to have good softness.

The nonwoven fabric produced using the conjugate fiber of the present invention can be utilized for applications in various fiber products requiring bulkiness and compression resistance, for example, in an absorbent material such as diaper, napkin and incontinence pad, a medical and hygienic material such as gown and surgical coat, an indoor interior material such as wall sheet, shoji paper and floor material, a daily life-related material such as cover cloth, cleaning wiper and kitchen garbage cover, a toiletry product such as disposable toilet and toilet cover, a pet product such as pet sheet, pet diaper and pet towel, an industrial material such as wiping material, filter, cushioning material, oil adsorbent and ink tank adsorbent, a general medical material, a bedding material, and a nursing care product.

Examples

The present invention is described below by referring to Examples, but the present invention is not limited to these Examples. In each of Examples, physical evaluations were performed by the later-described methods.

(Thermoplastic Resin)

As the thermoplastic resin constituting the conjugate fiber, the following resins were used. Resin 1: a high-density polyethylene having a density of 0.96 g/cm$^3$, MFR (190°C, load: 21.18 N) of 16 g/10 min and a melting point of 130°C (abbr.: PE); Resin 2: crystalline polypropylene having MFR (230°C, load: 21.18 N) of 5 g/10 min and a melting point of 162°C (abbr.: PP); and Resin 3: polyethylene terephthalate having an intrinsic viscosity of 0.64 and a glass transition temperature of 70°C (abbr.: PET).

(Method for Adding Inorganic Fine Particle)

As the method for adding an inorganic fine particle to the conjugate fiber, the following method was used.
A powder of inorganic fine particle was processed into a masterbatch and then added to the first component and/or second component. The resin used for forming the masterbatch was the same resin as the first or second component.

(Production of Heat-bondable Conjugate Fiber)

Using the thermoplastic resin shown in Table 1 or 2 and arranging the first component and the second component on the core side and the sheath side, respectively, spinning was performed with the extrusion temperature, conjugate ratio (volume ratio) and cross-sectional shape similarly shown in the Table. During the spinning, a fiber treating agent containing an alkyl phosphate K salt as the main component was put into contact with the spun fiber by means of an oiling roll to attach the fiber treating agent to the fiber.
The resulting undrawn fiber was subjected to a drawing step and a crimp (mechanical crimp)-imparting step under the conditions shown in Table 1 or 2 by using a drawing machine and setting the drawing temperature (surface temperature of hot roll) to be from 90 to 125°C. Thereafter, a drying step (heat treatment step) was applied for 5 minutes at the drying temperature (heat treatment temperature) shown in Table 1 or 2 by using a hot air circulating dryer to obtain a heat-bondable conjugate fiber.
Subsequently, the fiber was cut by a cutter into a short fiber, and this fiber was used as the sample fiber.

(Fabrication of Nonwoven Fabric)

The heat-bondable conjugate fiber was set on a roller carding machine, and a web was sampled and heat-treated at a treatment temperature of 138°C by using a hot air circulating heat-treatment machine to thermally bond the sheath component, whereby a nonwoven fabric having a basis weight of about 25 g/m$^2$ was obtained.

(Measurement of Melt Mass Flow Rate (MFR))

The melt mass flow rate was measured in accordance with JIS K 7210 (1999). Here, MI was measured in conformity with Condition D (test temperature: 190°C, load: 2.16 kg) of Appendix A, Table 1, and MFR was measured in conformity with Condition M (test temperature: 230°C, load: 2.16 kg).

(Measurement of Tensile Strength/Elongation of Fiber)

The fineness and tensile strength/elongation of the sample fiber were measured in accordance with JIS L 1015 (2010).

(Measurement of Number of Crimps)

The length when an initial load of 0.18 mN/tex was applied to the sample fiber of 25 mm (or 20 mm) was measured, the number of crimps at the time was counted, and the number of crimps per 25 mm (or 20 mm) was determined.

(Measurement of Crimp Modulus)

The length when an initial load of 0.18 mN/tex was applied to the sample fiber of 25 mm (or 20 mm) was measured. Furthermore, the length when a load of 4.41 mN/tex was applied was measured, and then, all loads were removed. After leaving the sample to stand for 2 minutes, the length was measured by applying the initial load, and the crimp modulus (%) was calculated.

(Specific Volume)

The nonwoven fabric was measured for the thickness by using Digimatic Indicator (manufactured by Mitutoyo Corporation) under a load of 3.5 g/cm², and from the measured thickness, the specific volume was calculated using the following mathematical formula:

$$\text{Specific volume of nonwoven fabric } (\text{cm}^3/\text{g}) = \text{thickness of nonwoven fabric } (\text{mm})/\text{basis weight of nonwoven fabric } (\text{m}^2/\text{g}) \times 1,000$$

The bulkiness was evaluated by the value of specific volume obtained.

(Average Load)

Four nonwoven fabrics obtained by the method for Fabrication of Nonwoven Fabric were stacked to make a sample of 100 g/m², and three sets were prepared. Each sample was previously measured for the thickness, and the measured value was used for the measurement of work amount and the calculation of load. The thickness of sample was measured by a caliper at 4 portions per sample, and the arithmetic mean value thereof was used.
Each sample was compressed by means of a pressure plate (a disc of 2 cm²) at a rate of 0.4 mm/sec by using a compression tester (KES-G5) manufactured by Kato Tech Co., Ltd. until the thickness of sample was reduced to 50%, and the work amount at this time was measured.
The load (gf/cm²) was calculated by dividing the obtained work amount by the 50% thickness of sample (compression distance).
The average load was determined as the arithmetic mean value of loads calculated for three sample sets.
The softness was evaluated by the value of average load obtained.

[Table 1]

Table 1

| | | Example 1 | Example 2 | Example 3 | Example 4 | Example 5 | Example 6 |
|---|---|---|---|---|---|---|---|
| First component | Resin used | PET | PET | PET | PET | PET | PET |
| | Intrinsic viscosity ($\eta$) | 0.64 | 0.64 | 0.64 | 0.64 | 0.64 | 0.64 |
| | Glass transition temperature (°C) | 70 | 70 | 70 | 70 | 70 | 70 |
| | Melting point (°C) | 255 | 255 | 255 | 255 | 255 | 255 |
| | Extrusion temperature (°C) | 305 | 305 | 305 | 305 | 305 | 305 |
| Second component | Resin used | PE | PE | PE | PE | PE | PE |
| | MFR(g/10min) | 16 | 16 | 16 | 16 | 16 | 16 |
| | Melting point (°C) | 130 | 130 | 130 | 130 | 130 | 130 |
| | Extrusion temperature (°C) | 240 | 240 | 240 | 240 | 240 | 240 |
| Production conditions | Fineness of spun yarn (dtex) | 7.2 | 9.9 | 10.3 | 10.2 | 15.5 | 15.5 |
| | Draw ratio | 3.6 (85%) | 4.0 (80%) | 4.1 (82%) | 4.1 (82%) | 4.3 (8.3%) | 4.3 (83%) |
| | Drawing temperature (°C) | 115 | 110 | 110 | 110 | 110 | 110 |
| | Mechanical crimp-imparting temperature (°C) | 100 | 90 | 90 | 90 | 90 | 90 |
| | Number of mechanical crimps (crests/2.54 cm) | 5 | 6 | 6 | 6 | 5 | 5 |
| | Drying temperature (heat treatment temperature) (°C) | 120 | 115 | 115 | 115 | 115 | 115 |

| | | Example 1 | Example 2 | Example 3 | Example 4 | Example 5 | Example 6 |
|---|---|---|---|---|---|---|---|
| Physical properties of fiber | Net fineness (dtex) | 2.8 | 3.3 | 3.0 | 3.0 | 4.4 | 4.1 |
| | Conjugate ratio (first/second) | 50/50 | 50/50 | 50/50 | 50/50 | 50/50 | 40/60 |
| | Additive | $TiO_2$ | $TiO_2$ | $TiO_2$ | $TiO_2$ | $TiO_2$ | $TiO_2$ |
| | Additive ratio (first/second: %) | 0/0 | 0/0 | 3.7/0 | 0/0 | 0/0 | 0/0 |
| | Fiber cross-section | side-by-side | side-by-side | s ide-by-s ide | eccentric sheath-core | eccentric sheath-core | eccentric sheath-core |
| | Cross-sectional shape | | | | | | |
| | Proportion of second component in outer fiber circumference (%) | 50 | 50 | 50 | 100 | 100 | 100 |
| | Cut length (mm) | 45 | 51 | 51 | 51 | 51 | 51 |
| | Fiber strength (cN/dtex) | 2.8 | 2.3 | 2.3 | 2.6 | 2.3 | 2.1 |
| | Fiber elongation (%) | 76 | 106 | 92 | 92 | 109 | 102 |
| | Crimp shape (%) | three-dimensional actualized crimp (spiral (50)+ohm (50)) | three-dimensional actualized crimp (spiral (50)+ohm (50)) | three-dimensional actualized crimp (spiral (50)+ohm (50)) | three-dimensional actualized crimp (spiral (50)+ohm (50)) | three-dimensional actualized crimp (spiral (50)+ohm (50)) | three-dimensional actualized crimp (spiral (50)+ohm (50)) |
| | Number of actualized crimps (crests/2.54 cm) | 12 | 15 | 13 | 13 | 12 | 12 |
| | Crimp modulus (%) | 93.9 | 96.8 | 96.6 | 97.1 | 98.4 | 96.4 |

EP 3 004 438 B1

(continued)

| | | Example 1 | Example 2 | Example 3 | Example 4 | Example 5 | Example 6 |
|---|---|---|---|---|---|---|---|
| Physical Properties of nonwoven fabric | Basis weight (g/m$^2$) | 25 | 25 | 25 | 25 | 25 | 25 |
| | Thickness (mm) | 2.4 | 2.6 | 2.5 | 2.2 | 2.9 | 2.8 |
| | Specific volume (cm$^3$/g) | 96 | 104 | 100 | 88 | 116 | 112 |
| | Average load (gf/cm$^2$) | 3.6 | 5.4 | 4.8 | 3.5 | 3.0 | 3.9 |

[Table 2]

Table 2

| | | Comparative Example 1 | Comparative Example 2 | Comparative Example 3 | Comparative Example 4 | Comparative Example 5 |
|---|---|---|---|---|---|---|
| First component | Resin used | PET | PET | PET | PET | PP |
| | Intrinsic viscosity ($\eta$) | 0.64 | 0.64 | 0.64 | 0.64 | - |
| | Glass transition temperature (°C) | 70 | 70 | 70 | 70 | - |
| | Melting point (°C) | 255 | 255 | 255 | 255 | 162 |
| | Extrusion temperature (°C) | 300 | 305 | 305 | 305 | 315 |
| Second component | Resin used | PE | PE | PE | PE | PE |
| | MFR (g/10 min) | 16 | 16 | 16 | 16 | 16 |
| | Melting point (°C) | 130 | 130 | 130 | 130 | 130 |
| | Extrusion temperature (°C) | 240 | 240 | 240 | 240 | 240 |
| Production conditions | Fineness of spun yarn (dtex) | 5.2 | 8.6 | 8.0 | 9.9 | 15.9 |
| | Draw ratio | 2.3 (96%) | 3.2 (80%) | 3.0 (65%) | 5.2 (96%) | 5.0 (96%) |
| | Drawing temperature (°C) | 95 | 90 | 115 | 115 | 125 |
| | Mechanical crimp-imparting temperature (°C) | 100 | 10 | 90 | 90 | - |
| | Number of mechanical crimps (crests/ 2.54 cm) | 15 | 15 | 10 | 10 | 0 |
| | Drying temperature (heat treatment temperature) (°C) | 120 | 110 | 115 | 115 | - |

(continued)

| | | Comparative Example 1 | Comparative Example 2 | Comparative Example 3 | Comparative Example 4 | Comparative Example 5 |
|---|---|---|---|---|---|---|
| Physical properties of fiber | Net fineness (dtex) | 2.9 | 3.2 | 3.0 | 2.3 | 3.4 |
| | Conjugate ratio (first/second) | 40/60 | 40/60 | 50/50 | 50/50 | 50/50 |
| | Additive | $TiO_2$ | $TiO_2$ | $TiO_2$ | $TiO_2$ | $TiO_2$ |
| | Additive ratio (first/second: %) | 0/0 | 2.5/5.0 | 0/0 | 0/0 | 0/0 |
| | Fiber cross-section | concentric circle | eccentric sheath-core | side-by-side | side-by-side | eccentric sheath-core |
| | Cross-sectional shape | | | | | |
| | Proportion of second component in outer fiber circumference (%) | 100 | 100 | 50 | 50 | 100 |
| | Cut length (mm) | 45 | 51 | 51 | 51 | 51 |
| | Fiber strength (cN/dtex) | 1.8 | 2.3 | 1.8 | 2.8 | 3.4 |
| | Fiber elongation (%) | 45 | 81 | 136 | 49 | 30 |
| | Crimp shape (%) | two-dimensional mechanical crimp, planar zigzag (100) | two-dimensional mechanical crimp, planar zigzag (100) | three-dimensional actualized crimp (spiral (50)+ohm (50)) | two-dimensional mechanical crimp, planar zigzag (100) | three-dimensional actualized crimp (spiral (50)+ohm (50)) |
| | Number of actualized crimps (crests/ 2.54 cm) | 0 | 0 | 11 | 8 | 9 |
| | Crimp modulus (%) | 94.1 | 83.5 | 86.8 | 91.6 | 95 |
| Physical Properties of nonwoven fabric | Basis weight (g/m$^2$) | 25 | 25 | 25 | 25 | 25 |
| | Thickness (mm) | 1.9 | 2.3 | 1.7 | 1.7 | 3.1 |
| | Specific volume (cm$^3$/g) | 76 | 92 | 68 | 68 | 124 |
| | Average load (gf/cm$^2$) | 12.4 | 9.5 | 4.8 | 6.8 | 7.1 |

As apparent from the results above, in Examples 1 to 6 according to the present invention, the fiber elongation is from 50 to 120% and at the same time, the crimp modulus is increased, revealing that the crimp configuration stability can be ensured even in the state of leaving elongation of the fiber. It is also understood that the bulkiness (evaluated by the specific volume) and softness (evaluated by the average load) of the nonwoven fabric produced using the conjugate fiber of the present invention are enhanced.

In the conjugate fiber of Comparative Example 3, it is seen that the fiber elongation shows a very high value of 136%, revealing enhanced softness of the nonwoven fabric produced using this conjugate fiber, but the bulkiness is not good compared with Examples.

While the invention has been described in detail and with reference to specific embodiments thereof, it will be apparent to one skill in the art that various changes and modifications can be made therein without departing from the scope of present claims.

This application is based on Japanese patent application No. 2013-115739 filed on May 31, 2013.

Industrial Applicability

The heat-bondable conjugate fiber of the present invention can maintain the crimp configuration stability while leaving elongation of the fiber and thereby makes it possible to produce a nonwoven fabric with high softness and excellent bulkiness. The nonwoven fabric obtained from the heat-bondable conjugate fiber of the present invention is excellent in the softness and bulkiness and therefore, can be utilized for applications requiring both bulkiness and softness, e.g., applications in various fiber products requiring bulkiness and softness, for example, in an absorbent material such as diaper, napkin and incontinence pad, a medical and hygienic material such as gown and surgical coat, an indoor interior material such as wall sheet, shoji paper and floor material, a daily life-related material such as cover cloth, cleaning wiper and kitchen garbage cover, a toiletry product such as disposable toilet and toilet cover, a pet product such as pet sheet, pet diaper and pet towel, an industrial material such as wiping material, filter, cushioning material, oil adsorbent and ink tank adsorbent, a general medical material, a bedding material, and a nursing care product.

## Claims

1. A heat-bondable conjugate fiber comprising a first component containing a polyester-based resin and a second component containing a polyolefin-based resin having a melting point lower by 15°C or more than the melting point of said polyester-based resin, wherein said second component is a heat-bondable conjugate fiber accounting for 30% or more of the outer fiber circumference in the fiber cross-section intersecting the length direction of the fiber and having a side-by-side or eccentric sheath-core structure and the fiber has an elongation of 50 to 120%, a three-dimensional actualized crimp with 10 to 20 crests/2.54 cm and a crimp modulus of 85 to 100%, wherein the crimp modulus is determined according to the method specified herein.

2. The heat-bondable conjugate fiber as claimed in claim 1, wherein said polyester-based resin is at least one member selected from the group consisting of polyethylene terephthalate, polypropylene terephthalate, polybutylene terephthalate, polylactic acid, polybutylene succinate, and polybutylene adipate terephthalate.

3. The heat-bondable conjugate fiber as claimed in claim 1 or 2, wherein said polyolefin-based resin is at least one member selected from the group consisting of polyethylene, polypropylene, and a copolymer with the main component being propylene.

4. The heat-bondable conjugate fiber as claimed in claim 1, wherein the fineness of the heat-bondable conjugate fiber is from 0.9 to 8.0 dtex.

5. The heat-bondable conjugate fiber as claimed in claim 1, wherein an inorganic fine particle is contained in the heat-bondable conjugate fiber and the content of said inorganic fine particle is from 0.1 to 10 mass% based on the mass of said heat-bondable conjugate fiber.

6. A method for producing the heat-bondable conjugate fiber claimed in claim 1, comprising:

   a step of obtaining an undrawn fiber by melt-spinning a first component containing a polyester-based resin and a second component containing a polyolefin-based resin having a melting point lower by 15°C or more than the melting point of said polyester-based resin to have a side-by-side or eccentric sheath-core cross-sectional shape in which said second components accounts for 30% or more of the outer fiber circumference,
   a step of drawing the obtained undrawn fiber to 75 to 95% of the draw ratio at break of the undrawn fiber wherein the drawing temperature is a temperature higher by at least 30°C than the glass transition temperature of the polyester-based resin of the first component and less by at least 70°C than the glass transition temperature of the polyester-based resin of the first component and at the same time, less than the melting point of the polyolefin-based resin constituting the second component, and
a step of heating the obtained drawn fiber to impart three-dimensional actualized crimping by heat shrinkage.

7. The method for producing a heat-bondable conjugate fiber as claimed in claim 6, wherein after the drawing step, the obtained drawn fiber is mechanically crimped to impart two-dimensional crimping with a number of crimps of 5 to 10 crests/2.54 cm.

8. A nonwoven fabric obtained using the heat-bondable conjugate fiber claimed in claims 1.

9. The nonwoven fabric as claimed in claim 8, wherein the specific volume of the nonwoven fabric is from 80 to 130 cm$^3$/g.

**Patentansprüche**

1. Wärmebindungsfähige Konjugatfaser umfassend eine erste Komponente, die ein Harz auf Polyesterbasis enthält, und eine zweite Komponente, die ein Harz auf Polyolefinbasis mit einem Schmelzpunkt, der um 15°C oder mehr niedriger als der Schmelzpunkt des Harzes auf Polyesterbasis ist, enthält, wobei die zweite Komponente eine wärmebindungsfähige Konjugatfaser ist, die 30% oder mehr des äußeren Faserumfangs im Faserquerschnitt, der die Längsrichtung der Faser durchschneidet, ausmacht, und eine Seite-an-Seite- oder eine exzentrische Mantel-Kern-Struktur hat, und wobei die Faser eine Ausdehnung von 50 bis 120%, eine dreidimensionale verwirklichte Kräuselung mit 10 bis 20 Kämmen/2,54 cm und einen Kräuselmodul von 85 bis 100% hat, wobei der Kräuselmodul gemäß des hierin festgelegten Verfahrens bestimmt ist.

2. Wärmebindungsfähige Konjugatfaser wie in Anspruch 1 beansprucht, wobei das Harz auf Polyesterbasis mindestens ein Mitglied, das aus der Gruppe bestehend aus Polyethylenterephthalat, Polypropylenterephthalat, Polybutylenterephthalat, Polymilchsäure, Polybutylensuccinat und Polybutylenadipat-terephthalat ausgewählt ist, ist.

3. Wärmebindungsfähige Konjugatfaser wie in Anspruch 1 oder 2 beansprucht, wobei das Harz auf Polyolefinbasis mindestens ein Mitglied ist, das aus der Gruppe bestehend aus Polyethylen, Polypropylen und einem Copolymer, bei dem die Hauptkomponente Propylen ist, ausgewählt ist.

4. Wärmebindungsfähige Konjugatfaser wie in Anspruch 1 beansprucht, wobei die Feinheit der wärmebindungsfähigen Konjugatfaser 0,9 bis 8,0 dtex ist.

5. Wärmebindungsfähige Konjugatfaser wie in Anspruch 1 beansprucht, wobei ein anorganisches Feinteilchen in der wärmebindungsfähigen Konjugatfaser enthalten ist und der Gehalt des anorganischen Feinteilchens 0,1 bis 10 Gew.-%, basierend auf dem Gewicht der wärmebindungsfähigen Konjugatfaser, ist.

6. Verfahren zum Herstellen der wärmebindungsfähigen Konjugatfaser wie in Anspruch 1 beansprucht, umfassend:

   einen Schritt des Erhaltens einer unverstreckten Faser durch Schmelzspinnen einer ersten Komponente, die ein Harz auf Polyesterbasis enthält, und einer zweiten Komponente, die ein Harz auf Polyolefinbasis mit einem Schmelzpunkt, der um 15°C oder mehr niedriger als der Schmelzpunkt des Harzes auf Polyesterbasis ist, enthält, um eine Seite-an-Seite- oder eine exzentrische Mantel-Kern-Querschnittsform zu haben, in der die zweite Komponente 30% oder mehr des äußeren Faserumfangs ausmacht,
   einen Schritt des Streckens der erhaltenen unverstreckten Faser auf 75 bis 95% des Streckungsverhältnisses beim Brechen der unverstreckten Faser, wobei die Streckungstemperatur eine Temperatur ist, die um mindestens 30°C höher als die Glasübergangstemperatur des Harzes auf Polyesterbasis der ersten Komponente ist und die um mindestens 70°C niedriger als die Glasübergangstemperatur des Harzes auf Polyesterbasis der ersten Komponente und gleichzeitig niedriger als die Schmelztemperatur des Harzes auf Polyesterbasis, das die zweite Komponente bildet, ist, und
   einen Schritt des Erwärmens der erhaltenen gestreckten Faser, um eine dreidimensionale verwirklichte Kräuselung durch Wärmeschrumpfung zu vermitteln.

7. Verfahren zum Herstellen einer wärmebindungsfähigen Konjugatfaser wie in Anspruch 6 beansprucht, wobei nach dem Streckungsschritt die erhaltene gestreckte Faser mechanisch gekräuselt wird, um eine zweidimensionale Kräuselung mit einer Anzahl von Kräuselungen von 5 bis 10 Kämmen/2,54 cm zu vermitteln.

8. Vliesstoff, erhalten durch Verwenden der wärmebindungsfähigen Konjugatfaser wie in Anspruch 1 beansprucht.

9. Vliesstoff wie in Anspruch 8 beansprucht, wobei das spezifische Volumen des Vliesstoffs 80 bis 130 cm$^3$/g ist.

**Revendications**

1. Une fibre conjuguée thermosoudable comprenant un premier composant contenant une résine à base de polyester et un second composant contenant une résine à base de polyoléfine ayant un point de fusion inférieur de 15°C ou davantage que le point de fusion de ladite résine à base de polyester, dans laquelle le second composant est une fibre conjuguée thermosoudable représentant 30% ou plus de la circonférence externe de la fibre dans la section transversale de la fibre croisant la direction selon la longueur de la fibre et ayant une structure noyau-gaine côte à côte ou excentrique et la fibre présente un allongement de 50 à 120%, une frisure réalisée en trois dimensions de 10 à 20 crêtes/2,54 cm et un module de frisure de 85 à 100%, dans laquelle le module de frisure est déterminé selon la méthode spécifiée ci-après.

2. La fibre conjuguée thermosoudable selon la revendication 1, dans laquelle ladite résine à base de polyester est au moins un composé choisi dans le groupe constitué par le polyéthylène téréphtalate, le polypropylène téréphtalate, le polybutylène téréphtalate, l'acide polylactique, le polybutylène succinate et le polybutylène adipate téréphtalate.

3. La fibre conjuguée thermosoudable selon la revendication 1 ou 2, dans laquelle ladite résine à base de polyoléfine est au moins un composé choisi dans le groupe constitué par le polyéthylène, le polypropylène et un copolymère dont le composant principal est le propylène.

4. La fibre conjuguée thermosoudable selon la revendication 1, dans laquelle la finesse de la fibre conjuguée thermosoudable est de 0,9 à 8,0 dtex.

5. La fibre conjuguée thermosoudable selon la revendication 1, dans laquelle une fine particule inorganique est contenue dans la fibre conjuguée thermosoudable et la teneur en ladite fine particule inorganique est de 0,1 à 10% en masse par rapport à la masse de ladite fibre conjuguée thermosoudable.

6. Un procédé de production de la fibre conjuguée thermosoudable telle que revendiquée dans la revendication 1, comprenant:

    - une étape d'obtention d'une fibre non étirée par filage en fusion d'un premier composant contenant une résine à base de polyester et un second composant contenant une résine à base de polyoléfine ayant un point de fusion inférieur de 15°C ou plus que le point de fusion de ladite résine à base de polyester pour avoir une forme de section transversale noyau-gaine côte à côte ou excentrique dans laquelle lesdits seconds composants représentent 30% ou plus de la circonférence externe de la fibre,
    - une étape d'étirage de la fibre non étirée obtenue à 75 à 95% du rapport d'étirage à la rupture de la fibre non étirée, dans laquelle la température d'étirage est une température supérieure d'au moins 30°C à la température de transition vitreuse de la résine à base de polyester du premier composant et inférieure d'au moins 70°C à la température de transition vitreuse de la résine à base de polyester du premier composant et en même temps inférieure au point de fusion de la résine à base de polyoléfine constituant le second composant, et
    - une étape de chauffage de la fibre étirée obtenue pour conférer une frisure tridimensionnelle réalisée par retrait thermique.

7. Procédé de production d'une fibre conjuguée thermosoudable selon la revendication 6, dans lequel, après l'étape d'étirage, la fibre étirée obtenue est frisée mécaniquement pour conférer une frisure bidimensionnelle avec un nombre de frisures de 5 à 10 crêtes/2,54 cm.

8. Un tissu non tissé obtenu à partir de la fibre conjuguée thermosoudable revendiquée dans la revendication 1.

9. Le tissu non tissé tel que revendiqué dans la revendication 8, dans lequel le volume spécifique du tissu non tissé est compris entre 80 et 130 cm$^3$/g.

**EP 3 004 438 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003003334 A
- JP 2008274448 A
- US 2010143717 A1
- WO 2012105602 A1
- WO 2011025062 A2
- US 2007014987 A1
- JP 2006097157 A
- JP 2013115739 A